# EUROPÄISCHE PATENTSCHRIFT

(11) **EP 2 083 130 B1**
(45) Veröffentlichungstag und Bekanntmachung des Hinweises auf die Patenterteilung: **22.12.2010**
(21) Anmeldenummer: 09000034.0
(22) Anmeldetag: 05.01.2009
(51) Int. Cl.: E04C 2/32, B32B 3/00, B32B 15/00, E04C 2/34

(54) **Verfahren zur Herstellung einer Höckerverbundplatte**
Method for the production of a dimple panel
Méthode pour la production d'un panneau composite avec des protubérances

(30) Priorität: 15.01.2008 DE 102008004544
(43) Veröffentlichungstag der Anmeldung: 29.07.2009
(73) Patentinhaber: borit Leichtbau-Technik GmbH, 52134 Herzogenrath (DE)
(72) Erfinder: Bohmann, Dirk, 52146 Würselen (DE)
(74) Vertreter: Naeven, Ralf

(56) Entgegenhaltungen:
- DE-A1- 19 944 662
- US-A- 4 495 237
- US-A1- 2005 257 362

## Beschreibung

Die Erfindung betrifft ein Verfahren zur Herstellung einer Höckerverbundplatte, bei dem
a) ein erstes und ein zweites Blech zu jeweils einer Höckerplatte derart umgeformt werden, dass an den Höckerplatten jeweils auf einer Kontaktseite Höcker und zumindest an den Höckern Kontaktflächen gebildet werden, und
b) die Höckerplatten mit ihren Kontaktseiten ineinander gelegt und an ihren Kontaktflächen miteinander verklebt werden.

Ein Verfahren der vorgenannten Art ist aus der der DE 199 44 662 C2 bekannt. Hier werden mit sechs- und achteckigen Höckern ausgeformte Höckerplatten gezeigt, die nach dem Verbund eine hohe Eigensteifigkeit aufweisen. Der Verbund der Höckerplatten erfolgt durch nachträgliches Kleben an ihren Kontaktflächen, wodurch ein leichtes Verbundbauteil bzw. eine Kernstruktur für ein Sandwich entsteht. Die Kontaktflächen können sich an Seitenflächen der Höcker und/oder an Höckertiefflächen der Höcker befinden. Die Höckerseitenflächen kontaktieren entsprechende Höckerseitenflächen der jeweils anderen Höckerplatte, während die Höckertiefflächen die Gurtflächen der jeweils anderen Höckerplatte kontaktieren und dort verbunden sind. Die Gurtflächen sind die Flächen zwischen den Höckern.

Das Verfahren ist außerdem aus der US 4,495,237 A bekannt, wobei dort die Höcker eine Pyramidenform mit gegenüber dem zuerst genannten Stand der Technik kleineren Kontaktflächen und steileren, nicht in Blech einzuformenden Höckern aufweist.

Im vorgenannten Stand der Technik ist die Art und Weise des Auftrags des Klebstoffes und einer darauf angepassten Verbindungs- und Fertigungstechnik nicht offenbart. Bekannt ist jedoch, den Klebstoff nach dem Umformen der Höckerplatten aufzubringen, was mit Nachteilen verbunden ist.

So muss der Klebstoff sehr dünnflüssig sein, damit die beiden zusammen gesetzten und zu verklebenden Höckerplatten mit den üblichen zur Verfügung stehenden Methoden (z.B. einer Plattenpresse aus der Furnierverarbeitung) verpresst werden können. Der aufgetragene Klebstoff quetscht sich dabei aus der Klebefläche heraus, so dass der verbleibende Klebespalt eine undefinierte Dicke aufweist. Wird ein dickflüssigerer Klebstoff gewählt, reicht jedoch die Verpresskraft nicht mehr aus, die beiden Höckerplatten gegen die Wirkung des zähen Klebstoffes auf das erforderliche Maß zusammen zu drücken. Daher wird sehr viel Klebstoffmaterial nötig, was dem beabsichtigten Leichtbaueffekt entgegen wirkt. Werden dünne Plattenstücke für maximalen Leichtbau verwendet, z.B. 0,1 bis 0,5 mm starke Bleche, kann auf eine derartiges Höckerblech keine große Verpresskraft für das Verkleben aufgebracht werden, ohne die feinen Blech-Strukturen, insbesondere die Höcker, dabei zu zerstören.

Werden die beiden Höckerplatten in einer Werkzeugmatrize z.B. durch Hydroforming (siehe z.B. DE 103 14 673 B3), d.h. durch Umformung mittels Wasserdruck, gefertigt, liegen mit dem Zusammensetzen die - im Falle von Blechen metallischen - Kontaktflächen mit denen der jeweils anderen Höckerplatten im direkten Kontakt. Es bleiben somit allenfalls sehr geringe oder auch gar keine Spalten, in denen der Klebstoff an den Kontaktflächen eingefügt werden kann. Es müsste sehr dünnflüssiger Klebstoff verwendet werden, der sich dann allerdings beim Verpressen beider Höckerplatten nahezu vollständig aus den Kontaktflächen herausquetscht, was sich sehr nachteilig auf die Festigkeit der Verbindung auswirkt. Klebstoff muss jedoch in einer möglichst genau definierten und als optimal ermittelten Schichtdicke verwendet werden.

Weiterer Nachteil des Standes der Technik ist der hohe Aufwand, der für den nachträglichen Klebstoffauftrag nötig ist. Bereits ausgeformte Höcker sind aufgrund der räumlichen Struktur nur aufwändig zu reinigen, vorzubehandeln oder aufzurauen. Der Klebstoffauftrag benötigt nachgeschaltete Klebstoffauftragsanlagen und Stationen mit langen Verpressdauern, in denen der zwischen den Blechen eingebrachte Klebstoff aushärten kann.

Aufgabe der Erfindung ist es, ein Verfahren der eingangs genannten Art zur Verfügung zu stellen, mit dem die vorgenannten Nachteile beim Einbringen des Klebstoffes vermieden werden und eine effiziente Fertigung erreicht wird.

Diese Aufgabe wird durch die kennzeichnenden Merkmale des Anspruchs 1 gelöst.

Wird das für die spätere Umformung zu Höckerplatten verwendete Blechmaterial bereits vor dessen Umformung mit einer Klebstoffschicht versehen, kann der gesamte Klebstoffauftrag großtechnisch gelöst werden. Die vorher nötige Reinigung des Bleches, das Aufrauen oder sonstige chemische Oberflächenvorbereitungen können in Durchlaufanlagen direkt am Coil oder an abgelängten Blechstreifen (Platinen) erfolgen.

Die genannten Produktionsschritte können auch fremdbeauftragt werden, womit dann ein entsprechend mit Klebstoff vorbeschichteter Blechstreifen direkt vom Coil oder zugeschnitten zu Platinen in den Umformprozess eingesetzt werden kann. Die eigentliche Umformung erfolgt dann an dem mit Klebstoff vorkaschierten oder vorlaminierten Plattenmaterial.

Auf diese Weise ist ein vereinfachtes und kostengünstiges Herstellverfahren gegeben.

Die Anforderung an den aufgetragenen Klebstoff bzw. die auflaminierte Klebstofffolie besteht nur darin, die spätere Umformung des Bleches ohne Ablösungen und rissfrei mit zu machen. Das Aufbringen des Klebstoffes vor dem Umformen weist weitere prozessbegünstigende Vorteile auf.

So unterstützt die elastische Wirkung des Klebstoffes den Umformprozess in vielerlei Hinsicht: Zum einen bildet die Klebstoffseite einen Schutz zwischen dem Blech und dem Werkzeug, womit der Verschleiß beim Umformen minimiert wird. Der Klebstoffschutzfilm verbessert zudem durch Gleiteffekte die Umformbarkeit des Bleches, so dass tiefere Strukturen ausgeformt werden können.

Die Dicke des Bleches und die Schichtdicke des Klebstoffes haben keinen Einfluss auf die Passgenauigkeit innerhalb dieses Fertigungsverfahrens, so dass beliebige Eigenschaften der Verklebung (z.B. hohe elastische Dämpfungseffekte durch dickere Klebstoffschichten) wie auch höhere Steifigkeiten durch dickere Bleche frei einstellbar sind. Die Passgenauigkeit beider ausgeformter Höckerplatten wird alleinig durch die Formgebung in der Werkzeugmatrize definiert.

Weitere Vorteile können sich aus den Merkmalen der Unteransprüche ergeben.

So kann es vorteilhaft sein, das erfindungsgemäße Verfahren so auszuführen, dass das mindestens eine die Klebstoffschicht aufweisende Blech mittels eines Wirkmediums, insbesondere mit Wasserdruck oder mit Hilfe eines Gummikissens, umgeformt wird. Das im Falle des Wasserdrucks so genannte Hydroforming ist aus dem Stand der Technik (siehe z. B. DE 103 14 637 B3) im Zusammenhang mit der Umformung zu Höckerplatten bekannt. Das Hydroforming erlaubt das Arbeiten mit Werkzeugmatrizen, die die auszuformende Struktur an der Oberfläche des Werkzeuges vorgeben. Hier wird nicht wie beim Tiefziehen die Oberseite des Bleches durch einen Stempel geformt, sondern die Kontaktseite des mit der Klebstoffschicht versehenen Plattenstücks (also die Klebstoffoberfläche) an der Werkzeugmatrize 1 zu 1 abgeformt. Mit der geometrisch strikten Formvorgabe in der Werkzeugmatrize bildet die Oberseite des Klebstoffes exakt die innere im Verbundbauteil liegende Trennfläche.

Des Weiteren bildet die Klebstofffolie eine bereits im Blech integrierte Dichtung, durch die der Umformbereich beim Hydroforming nach außen abgedichtet wird, während das Plattenstück mit mehreren tausend Bar beaufschlagt und in die Matrize hinein streckumgeformt wird. Auf eine zusätzliche Dichtschnur, wie z. B. in DE 103 14 637 B3 gezeigt, kann damit bei Verwendung angepasster Hydroformpressen zum Durchtakten von Höckerplatten verzichtet werden.

Des Weiteren ist es vorteilhaft sein, das erfindungsgemäße Verfahren so auszuführen, dass beide Bleche in derselben Werkzeugmatrix oder in identischen Werkzeugmatrizen umgeformt werden. Es kann aber auch durch die Verwendung von zwei unterschiedlichen Matrizen eine Höckerverbundplatte nach Erfindung mit kontaktierenden und klebstoffbeschichteten Flächen geschaffen werden.

Beim Zusammenlegen der umgeformten Höckerplatten liegt der mitumgeformte Klebstoff definiert spaltfrei mit der Gegenseite im Kontakt. Die so gebildete Höckerverbundplatte braucht nur noch kurz aufgeheizt und eventuell leicht verpresst zu werden. Der Klebstoff erweicht dabei oder wird aktiviert und verbindet sich sofort ohne sonst nötige Materialumlagerungen mir der Gegenseite. Da kein Spalt vorhanden ist und der Klebstoff bereits exakt an der Stelle liegt wo er auch sein soll, braucht es auch keinen hohen Anpressdruck mehr. Dieser Arbeitschritt kann z.B. durch einen Durchlaufofen mit Aufheiz-, leichtem Verpress- und Abkühlbereich erfolgen. Mit dem Abkühlen ist aus den beiden Höckerplatten eine Verbundplatte mit hoher Steifigkeit geworden. Dabei ist es nicht zwingend nötig, alle Bereiche beider Höckerplatten zu kontaktieren und auf diese Weise zu verbinden; es können planmäßig auch Poren, Hohlräume oder durchgehende Kanäle im Verbundbauteil vorgesehen werden. Die Klebstoffbeschichtung bildet dabei auf den inneren Flächen der Höckerverbundplatte eine Korrosionsschutzschicht.

Der Klebstoff kann in Form einer Folie oder auch in fluider Form, z.B. extrudierend, aufgetragen werden. In beiden Fällen kann der Verbund zwischen Klebstoffschicht und Plattenstück durch Walzen verbessert werden. In der Regel wird die Klebstoffschicht beim Auftragprozess kurzzeitig bis zum Schmelzpunkt erwärmt, um die Haftung am Blech zu erzeugen.

Die Klebstoffschicht kann z.B. aus einem Heißschmelzklebestoff oder aus einem aktivierbaren Klebstoff bestehen. Aus dem Stand der Technik allgemein bekannte aktivierbare Klebstoffe umfassen Substanzen, die erst bei Zufuhr von Energie chemisch miteinander reagieren und hiernach die gewünschten Klebstoffeigenschaften erzeugen. Die Aktivierung kann z.B. durch Temperaturzufuhr, Mikrowellen, Induktion oder Druck erfolgen.

Des Weiteren kann es vorteilhaft sein, das erfindungsgemäße Verfahren so auszuführen, dass direkt zwei oder mehrere Höckerplatten im gleichen Arbeitshub in zwei gegenseitig angeordneten Werkzeugmatrizen umgeformt werden, wobei eine Höckerstruktur eines ersten durch die Umformpresse geführten Bleches nach unten und die Höckerstruktur eines unteren, zweiten gleichzeitig durch die Umformpresse geführten Bleches nach oben ausgeformt werden. Dies hat den Vorteil, dass beide Höckerplatten nach dem Umformen ihre Orientierung behalten können und für das Zusammenlegen das ansonsten notwendige Wenden eines der Höckerplatten entfällt.

Die vorliegende Erfindung wird nachstehend mit Bezug auf die Zeichnungsfiguren näher erläutert, die folgendes zeigen:

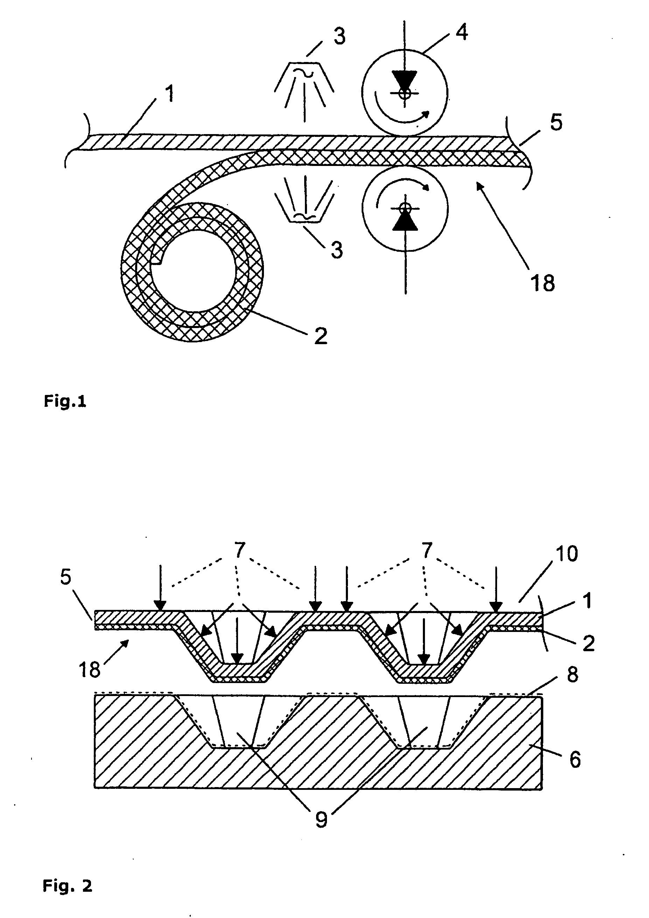

Fig. 1 zeigt eine Möglichkeit, wie eine Klebstofffolie 2 auf einem Blech 1 auflaminiert werden kann. Das Blech 1 kann hier von einem Coil abgewickelt oder in Form von Tafeln in den Laminierprozess eingeführt werden, wo die Klebstoffschicht 2 in Form einer Folie von der Rolle abgewickelt und an das Blech geführt wird. Heizstrahler 3 erwärmen das Blech 1 und den Klebstoff 2 auf Schmelztemperatur, wonach die beiden Teile durch Walzen 4 aneinander gepresst werden. Die Walzen 4 haben dazu vorteilhaft gummierte oder spezialbeschichtete Oberflächen (z.B. Teflonschicht), an denen der Klebstoff nicht haftet und einen blasenfreien Verbund beider Schichten (Blech 1 und Klebstoff 2) erzeugen, wobei die Klebstoffschicht 2 auf einer Kontaktseite 18 des vorlaminierten Bleches 5 angeordnet ist. Das mit Klebstoff 2 vorlaminierte Blech 5 gelangt dann in die weiteren Verarbeitungsstationen des Umformens.
Fig. 2 zeigt schematisch eine Halbseite einer bereits ausgeformten Höckerplatte 10. Mit Hilfe der Werkzeugmatrize 6, in der Höckerformen 9 eingebracht sind, wurde das vorlaminierte Blech 5 durch Hydroforming umgeformt. Der dabei schematisch dargestellt Umformdruck 7 hat das vorlaminierte Blech 5 bestehend aus Blech 1 und Klebstoffschicht 2 gemeinsam ausgeformt, so dass die Kontaktseite 18 des vorlaminierten Bleches 5 und damit die vom Blech 1 abgewandte Oberfläche mit der Klebstoffschicht 2 ein exaktes Abbild der Oberfläche 8 der Werkzeugmatrize ist.

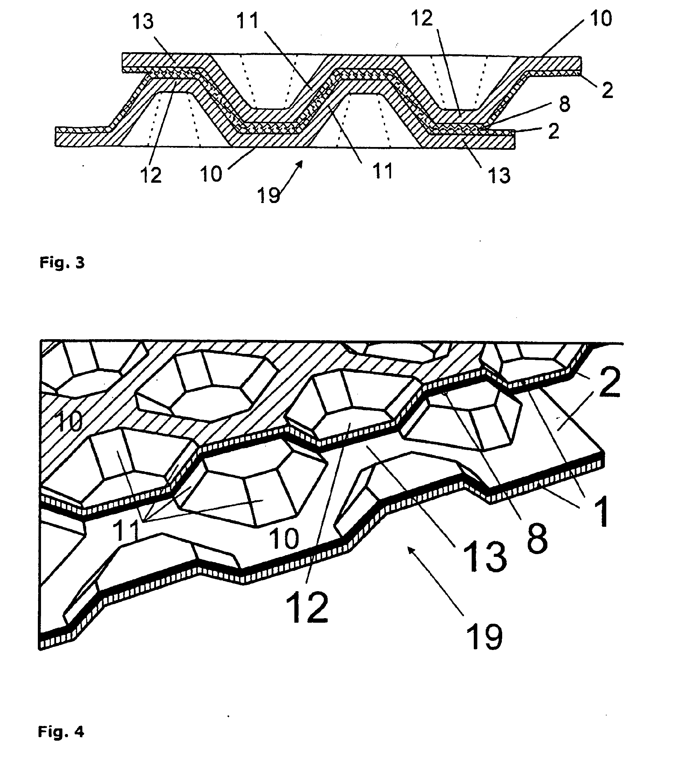

Fig. 3 zeigt eine mögliche Ausbildung der erfindungsgemäßen Höckerverbundplatte 19, in der zwei Höckerplatten 10 zusammengesetzt wurden und an einer Trennfläche 8 exakt flächig und spaltfrei mit den Oberflächen ihrer Klebstoffschichten 2 zusammenliegen. Die beiderseitig innen liegenden kontaktierenden Klebstoffschichten 2 werden nun nur noch kurz aufgeheizt, wodurch die Klebstoffschichten 2 aufschmelzen und nach Erkalten einen festen Verbund beider Höckerplatten 10 ausbildet. Dabei werden hier neben den Höckerseitenflächen 11 beider Höckerplatten 10 auch die Höckertiefflächen 12 mit den gegenüberliegenden Kontaktflächen 13 aufgeschmolzen und verbunden.
Fig. 4 zeigt eine mögliche Ausgestaltungsform der Höckerverbundplatte 19 in zusammengesetzter räumlicher Ansicht, in der die eingeformten Höcker aus Achtecken bestehen. Die untere Höckerplatte 10 mit aufkaschierter und mitumgeformter Klebstoffschicht 2 ist etwas verlängert dargestellt, so dass die Höckerseitenflächen 11 beider Höckerplatten 10 wie auch die Höckertiefflächen 12 und die in den Gurten gegebenen Kontaktflächen 13 der Höckeraußenflächen als kontaktierende und verbundene Flächen erkennbar sind. Die Oberflächen beider Klebstoffschichten 2 stellen die Trennebene 8 beider Höckerplatten 10 dar, die die Werkzeugmatrix 6 mit den Höckerformen 9 aus Fig. 2 vorgegeben hat.

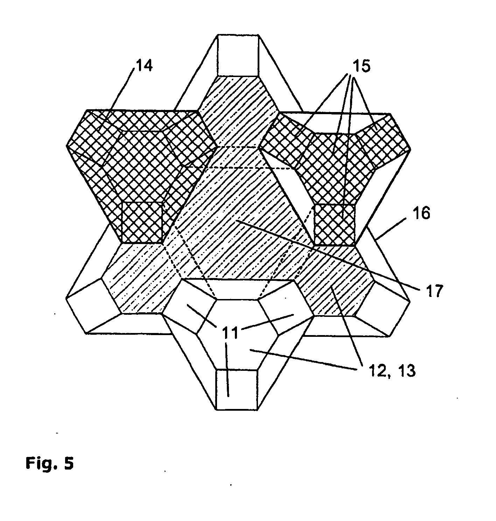

Fig. 5 zeigt eine vorteilhafte Ausführungsform der erfindungsgemäßen Höckerverbundplatte 19 mit sechseckigen Höckerformen. Die dargestellten Konturlinien 16 beschreiben die geometrische Lage der zwischen beiden Höckerplatten 10 auf der Klebstoffoberfläche liegenden Trennebenen, über die eine

Verbindung beider Höckerplatten 10 erfolgt. Besonders vorteilhaft für eine hohe Haftung beider Höckerplatten 10 ist ein großer kontaktierender und verklebter Flächenanteil 15, der hier 66% der Höckeröffnungsfläche 14 ausmacht. Drei sechseckige Höcker in der oberen Höckerplatte 10 liegen im Verbund mit drei Höckern der unteren Höckerplatte 10 und erzeugen dadurch einen eingeschlossenen, mittigen Hohlraum 17. Die Hälfte (drei von sechs) der Höckerseitenflächen 11 wie auch die Tiefflächen 12 dieser Höcker liegen hier mit der gegenüber liegenden entsprechenden Flächenteilen 11 und 13 der jeweils anderen Höckerplatte 10 im Verbund.

### Bezugszeichenliste

- 1: Blech
- 2: Klebstoff
- 3: Heizstrahler
- 4: Walze
- 5: vorlaminiertes Blech
- 6: Werkzeugmatrize
- 7: Umformdruck
- 8: Oberfläche der Werkzeugmatrize
- 9: Höckerform
- 10: Höckerplatte
- 11: Höckerseitenfläche
- 12: Höckertieffläche
- 13: Kontaktfläche (in den Gurten befindlich)
- 14: Höckeröffnungsfläche
- 15: verklebter Flächenanteil
- 16: Konturlinie
- 17: Hohlraum
- 18: Kontaktseite
- 19: Höckerverbundplatte

## Patentansprüche

1. Verfahren zur Herstellung einer Höckerverbundplatte, bei dem
a) ein erstes und ein zweites Blech (1,5) zu jeweils einer Höckerplatte (10) derart umgeformt werden, dass an den Höckerplatten (10) jeweils auf einer Kontaktseite (18) Höcker und zumindest an den Höckern Kontaktflächen (11,12,13) gebildet werden, und
b) die Höckerplatten (10) mit ihren Kontaktseiten (18) aufeinander gelegt und an ihren Kontaktflächen (11,12,13) miteinander verklebt werden,
**dadurch gekennzeichnet, dass**
c) zumindest eines der beiden Bleche (1) vor dem Umformen auf seiner Kontaktseite (18) mit einer Klebstoffschicht (2) versehen wird und
d) die Klebstoffschicht (2) zum Verbinden der aufeinander gelegten Höckerplatten (10) aufgeheizt wird.

2. Verfahren nach Anspruch 1, **dadurch gekennzeichnet, dass** das mindestens eine die Klebstoffschicht aufweisende Blech (5) mittels eines Wirkmediums umgeformt wird.

3. Verfahren nach Anspruch 1 oder 2, **dadurch gekennzeichnet, dass** beide Bleche (5) in derselben Werkzeugmatrize (6) oder in identischen Werkzeugmatrizen umgeformt werden.

4. Verfahren nach einem der vorhergehenden Ansprüche, **dadurch gekennzeichnet, dass** Bleche (1, 5) mit voneinander verschiedenen Blechstärken verwendet werden.

5. Verfahren nach einem der vorhergehenden Ansprüche, **dadurch gekennzeichnet, dass** beide Bleche (5) vor dem Umformen auf ihrer Kontaktseite (18) mit einer Klebstoffschicht (2) versehen werden.

6. Verfahren nach Anspruch 5, **dadurch gekennzeichnet, dass** beide Bleche (5) mit unterschiedlich starken Klebstoffschichten (2) versehen werden.

7. Verfahren nach einem der vorhergehenden Ansprüche, **dadurch gekennzeichnet, dass** die Klebstoffschicht (2) geschlossen zumindest über den gesamten für die Ausformung von Höckern vorgesehenen Bereich des zu beschichtenden Bleches (1) aufgetragen wird.

8. Verfahren nach einem der vorhergehenden Ansprüche, **dadurch gekennzeichnet, dass** der Klebstoff (2) in Form einer Folie aufgebracht wird.

9. Verfahren nach einem der Ansprüche 1 bis 7, **dadurch gekennzeichnet, dass** der Klebstoff (2) als Fluid aufgetragen wird.

10. Verfahren nach einem der vorhergehenden Ansprüche, **dadurch gekennzeichnet, dass** die Klebstoffschicht (2) beim Auftragen gewalzt wird.

11. Verfahren nach einem der vorhergehenden Ansprüche, **dadurch gekennzeichnet, dass** ein Heißschmelzklebstoff (2) verwendet wird.

12. Verfahren nach einem der Ansprüche 1 bis 10, **dadurch gekennzeichnet, dass** ein aktivierbarer Klebstoff (2) verwendet wird.

13. Verfahren nach einem der vorhergehenden Ansprüche, **dadurch gekennzeichnet, dass** die Kontaktflächen (18) sowohl an den Höckern als auch an den zwischen den Höckern verlaufenden Gurtflächen vorgesehen werden.

14. Verfahren nach einem der vorhergehenden Ansprüche, **dadurch gekennzeichnet, dass** zwei Bleche (1, 5) gleichzeitig in einem Arbeitshub einer Umformpresse umgeformt werden.

15. Verfahren nach Anspruche 14, **dadurch gekennzeichnet, dass** beide Höckerplatten (10) beim Durchgang durch die Umformpresse mit den Kontaktseiten (18) einander zugewandt sind und unmittelbar nach Verlassen der Umformpresse aufeinander gelegt werden und anschließend zur Bildung der Verbundplatte (19) der Klebstoff erhitzt wird.

## Claims

1. Method for the production of a composite hump panel, in which method
a) a first and a second metal sheet (1, 5) are formed to give one hump panel (10) in each case, in such a manner that humps are formed on a contact side (18) on each of the hump panels (10) and contact surfaces (11, 12, 13) are formed at least on the humps, and
b) the hump panels (10) are placed one on top of the other with their contact sides (18) and are adhesively bonded to one another on their contact surfaces (11, 12, 13),
**characterized in that**
c) at least one of the two metal sheets (1) is provided with a layer of adhesive (2) on its contact side (18) before it is formed, and
d) the layer of adhesive (2) is heated in order to bond the hump panels (10) placed one on top of the other.

2. Method according to Claim 1, **characterized in that** the at least one metal sheet (5) having the layer of adhesive is formed by means of an active medium.

3. Method according to Claim 1 or 2, **characterized in that** both metal sheets (5) are formed in the same female mould (6) or in identical female moulds.

4. Method according to one of the preceding claims, **characterized in that** metal sheets (1, 5) with differing thicknesses are used.

5. Method according to one of the preceding claims, **characterized in that** both metal sheets (5) are provided with a layer of adhesive (2) on their contact side (18) before they are formed.

6. Method according to Claim 5, **characterized in that** both metal sheets (5) are provided with layers of adhesive (2) of differing thicknesses.

7. Method according to one of the preceding claims, **characterized in that** the layer of adhesive (2) is applied to be closed at least over the entirety of that region of the metal sheet (1) to be coated which is intended for the formation of dimples.

8. Method according to one of the preceding claims, **characterized in that** the adhesive (2) is applied in the form of a film.

9. Method according to one of Claims 1 to 7, **characterized in that** the adhesive (2) is applied as a fluid.

10. Method according to one of the preceding claims, **characterized in that** the layer of adhesive (2) is rolled as it is applied.

11. Method according to one of the preceding claims, **characterized in that** a hotmelt adhesive (2) is used.

12. Method according to one of Claims 1 to 10, **characterized in that** an activatable adhesive (2) is used.

13. Method according to one of the preceding claims, **characterized in that** the contact surfaces (18) are provided both on the humps and on the web surfaces running between the humps.

14. Method according to one of the preceding claims, **characterized in that** two metal sheets (1, 5) are formed simultaneously in one working stroke of a forming press.

15. Method according to Claim 14, **characterized in that** both hump panels (10) face towards each other with the contact sides (18) as they pass through the forming press and are placed one on top of the other immediately after they leave the forming press, and the adhesive is then heated in order to form the composite panel (19).

## Revendications

1. Procédé pour la production d'un panneau composite avec des protubérances, dans lequel
a) on déforme une première et une deuxième tôles (1, 5) en un panneau avec des protubérances (10), de telle manière que l'on forme sur les panneaux avec des protubérances (10) chaque fois des protubérances sur une face de contact (18) et des surfaces de contact au moins sur les protubérances (11, 12, 13), et
b) on pose les panneaux avec des protubérances (10) l'un sur l'autre avec leurs faces de contact (18) et on les colle l'un à l'autre sur leurs surfaces de contact (11, 12, 13),
**caractérisé en ce que**
c) on munit au moins une des deux tôles (1) d'une couche de colle (2) sur sa face de contact (18) avant la déformation, et
d) on chauffe la couche de colle (2) pour l'assemblage des panneaux avec des protubérances (10) posés l'un sur l'autre.

2. Procédé selon la revendication 1, **caractérisé en ce que** l'on déforme la tôle (5) présentant au moins une couche de colle au moyen d'un fluide actif.

3. Procédé selon la revendication 1 ou 2, **caractérisé en ce que** l'on déforme les deux tôles (5) dans la même matrice d'outil (6) ou dans des matrices d'outil identiques.

4. Procédé selon l'une quelconque des revendications précédentes, **caractérisé en ce que** l'on utilise des tôles (1, 5) présentant des épaisseurs de tôle différentes l'une de l'autre.

5. Procédé selon l'une quelconque des revendications précédentes, **caractérisé en ce que** l'on munit les deux tôles (5) d'une couche de colle (2) sur leur face de contact (18) avant la déformation.

6. Procédé selon la revendication 5, **caractérisé en ce que** l'on munit les deux tôles (5) de couches de colle (2) d'épaisseurs différentes.

7. Procédé selon l'une quelconque des revendications précédentes, **caractérisé en ce que** l'on dépose la couche de colle (2) fermée au moins sur toute la zone de la tôle à revêtir (1) prévue pour la déformation de protubérances.

8. Procédé selon l'une quelconque des revendications précédentes, **caractérisé en ce que** l'on dépose la colle (2) sous la forme d'un film.

9. Procédé selon l'une quelconque des revendications 1 à 7, **caractérisé en ce que** l'on dépose la colle (2) sous forme de fluide.

10. Procédé selon l'une quelconque des revendications précédentes, **caractérisé en ce qu'**on lamine la colle (2) lors du dépôt.

11. Procédé selon l'une quelconque des revendications précédentes, **caractérisé en ce que** l'on utilise une colle fusible à chaud (2).

12. Procédé selon l'une quelconque des revendications 1 à 10, **caractérisé en ce que** l'on utilise une colle activable (2).

13. Procédé selon l'une quelconque des revendications précédentes, **caractérisé en ce que** l'on prévoit les faces de contact (18) aussi bien sur les protubérances que sur les faces des plats s'étendant entre les protubérances.

14. Procédé selon l'une quelconque des revendications précédentes, **caractérisé en ce que** l'on déforme deux tôles (1, 5) simultanément en une course de travail d'une presse de déformation.

15. Procédé selon la revendication 14, **caractérisé en ce que** les deux panneaux avec des protubérances (10) sont tournés avec leurs faces de contact (18) l'une vers l'autre lors du passage à travers la presse de déformation et sont posés l'un sur l'autre immédiatement après avoir quitté la presse de déformation et la colle est ensuite chauffée pour former le panneau composite (19).
